# EUROPEAN PATENT APPLICATION

(11) **EP 2 174 554 A2**
(43) Date of publication of application: **14.04.2010**
(21) Application number: 09171395.8
(22) Date of filing: 25.09.2009
(51) Int. Cl.: A23D 9/06, C10G 3/00, C10G 25/02, C10L 1/00, C11B 3/00

(54) **Improvements in oils**

(30) Priority: 09.10.2008 EP 08105539
(71) Applicant: Infineum International Limited, Abingdon, Oxfordshire OX13 6BB (GB)
(72) Inventor: Sutkowski, Andrew, Abingdon, Oxfordshire OX13 6BB (GB)
(74) Representative: Capaldi, Michael Joseph

(57) **Abstract**

Contacting an oil derived from a vegetable or animal material with an ion-exchange medium, preferably a strong cation-exchange medium improves the oxidation stability of the oil.

## Description

This invention relates to fuel oil compositions containing fuel additives, the fuel oils being derived at least partially from plant or animal materials which have been processed to improve their oxidation stability.

Oils and fats derived from plant or animal materials are increasingly finding application as fuels and in particular, as partial or complete replacements for petroleum derived middle distillate fuels such as diesel. Commonly, such fuels are known as 'biofuels' or 'biodiesel'. Biofuels may be derived from many sources. Amongst the most common are the alkyl, often methyl, esters of fatty acids extracted from plants such as rapeseed, sunflower etc. These types of fuel are often referred to as FAME (fatty acid methyl esters).

There is an environmental drive to encourage the use of such fuels as they are obtained from a renewable source. There are also indications that biofuels produce less pollution on combustion than the equivalent petroleum-derived fuel.

However, as the fuels are derived from natural sources, they are prone to deterioration by oxidation when stored. To counter this it is common practice to add chemical anti-oxidant additives to biofuels. The most common types of species used are aryl-aminic and phenolic anti-oxidants such as diphenylamine, dialkylphenylamine, BHT (2,4-di-tert-butylhydroxytoluene) and BHQ 2,5,-di-tert-butylhydroquinone. Also used are ketonic, phosphorus-based and sugar ester anti-oxidants such as 2,4 nonanedione, di-lauryl phosphite, tri-tolyl phosphate and ascorbyl palmitate. US2004/0139649 A1 describes the use of BHT to increase the storage stability of biodiesel. Such chemical anti-oxidants are effective to prevent or retard the oxidation of biofuels however, their use leads to increased cost and complication, both in terms of the additives *per se* and the infrastructure needed to store, add and blend the additives into the biofuel. It would thus clearly be desirable to reduce the need for chemical anti-oxidants.

The present invention is based on the discovery that alkyl esters of fatty acids obtained from vegetable or animal materials can be treated using a simple process to significantly improve their oxidation resistance.

Thus in accordance with a first aspect, the present invention provides a fuel oil composition comprising a fuel oil and at least one fuel additive; wherein the fuel oil comprises alkyl esters of fatty acids obtained from vegetable or animal materials, optionally in combination with a petroleum-derived oil; wherein the alkyl esters of fatty acids obtained from vegetable or animal materials have been processed such that their oxidation stability has been improved, such processing comprising contacting the esters with one or more ion-exchange materials; wherein the one or more ion-exchange materials consist of materials represented by the formula: 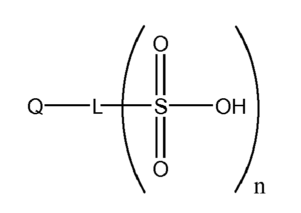 where Q represents a solid support, L represents an optional linking group and n is an integer of 1 or more.

Surprisingly it has been found that by contacting the esters with the defined ion-exchange material the oxidation stability of the esters can be improved.

The ion-exchange material is a sulphonic acid-functionalised ion-exchange material. This type of material is known in the art as a strong cation-exchange medium.

As is known in the art, the capacity of an ion-exchange material is defined as the total number of chemical equivalents available for exchange expressed per unit weight or unit volume of material. A measure of milliequivalents (meq) per dry gram is usually used for dry media and meq per millilitre (meq/ml) is usually used for wet media. In the present invention preferably, the one or more ion-exchange materials have a capacity of at least 2.0, preferably at least 2.5 meq/ml. Methods to measure this parameter will be known to those skilled in the art.

The solid support may be any solid support commonly used for ion-exchange applications. Thus Q may comprise oxidic materials such as silica, alumina, zirconia, yttria and the like, either in essentially pure form or doped, natural or synthetic zeolites, organic resins such as styrenedivinylbenzene copolymers, polystyrene/divinylbenzene matrices, natural or synthetic fibres or cloths and similar. Other suitable materials will be known to those skilled in the art. The physical form of the solid support may be chosen to suit a particular application; gels, resins, beads and powders may all find application.

Suitable ion-exchange media are commercially available. Examples include those sold under the Amberlite^{®}, Amberlyst^{®}, Amberjet^{®} and Dowex^{®} trade names. As an example, one material found to be suitable is Amberlyst^{®} 15. Conventional uses of these materials include the demineralisation of aqueous solutions, plating bath rejuvenation, rinse water recycling for plating operations and other uses as will be known to those skilled in the art.

Fatty acids and mixtures of fatty acids are obtainable from animal or vegetable materials. Commonly used are rapeseed oil, coriander oil, soyabean oil, cottonseed oil, sunflower oil, castor oil, olive oil, peanut oil, maize oil, almond oil, palm kernel oil, coconut oil, mustard seed oil, jatropha oil, beef tallow and fish oils. Further examples include oils derived from corn, jute, sesame, shea nut, ground nut and linseed oil. Rapeseed oil, which is a mixture of fatty acids partially esterified with glycerol is available in large quantities and can be obtained in a simple way by pressing from rapeseed. Recycled oils such as used kitchen oils are also suitable.

Exemplary fatty acids common from the above sources include those with 12 to 22 carbon atoms, for example lauric acid, myristic acid, palmitic acid, palmitoleic acid, stearic acid, oleic acid, elaidic acid, petroselic acid, ricinoleic acid, elaeostearic acid, linoleic acid, linolenic acid, eicosanoic acid, gadoleic acid, docosanoic acid or erucic acid. Typically these have an iodine number from 50 to 150, especially 90 to 125.

As alkyl esters of these fatty acids, consideration may be given to the following, for example as commercial mixtures: the ethyl, propyl, butyl and especially methyl esters. Especially suitable are those which contain mainly, i.e. to at least 50 wt% methyl esters of fatty acids with 16 to 22 carbon atoms and 1, 2 or 3 double bonds. The preferred alkyl esters of fatty acids are the methyl and ethyl esters, preferably methyl esters. Most preferred are methyl esters of oleic acid, linoleic acid, linolenic acid and erucic acid.

Commercial mixtures of the stated kind are obtained for example by cleavage and esterification of animal and vegetable fats and oils by their transesterification with lower aliphatic alcohols. For production of alkyl esters of fatty acids it is advantageous to start from fats and oils which contain low levels of saturated acids, less than 20%, and which have an iodine number of less than 130.

At present, biofuels are most commonly used in combination with petroleum-derived oils. The present invention is thus not only applicable to fuel oils purely of alkyl esters of fatty acids obtained from vegetable or animal materials but also to their mixtures with petroleum-derived oils. That is, the proportion (by weight) of the fuel oil being alkyl esters of fatty acids may be essentially 100% in the case of pure biofuels, or any proportion lower than 100% in the case of biofuel/diesel fuel blends. Preferred biofuel/diesel fuel blends are those where the proportion (by weight) of the alkyl esters is from 2 - 95%, preferably 2 - 50%, more preferably 2 - 25%, the remainder being a petroleum-derived oil.

The alkyl esters of fatty acids may be contacted with the one or more ion-exchange materials at any temperature where the esters are in liquid form. Preferably however, the esters will be at an elevated temperature. Temperatures of between 40 and 100°C have been found to be suitable.

The length of time that the esters are in contact with the material will depend on factors such as the amount and surface area of the material and the volume of ester to be treated. Those skilled in the art will be able to determine optimum times which may range from a few seconds to a few hours.

It will be clear that the precise method for contacting the ester with the material is not critical and options are within the ambit of those skilled in the art. Simply placing both the esters and the material together in an appropriate container, with or without agitation, is suitable. Alternatively the material may be contained in a filter or column and the esters passed through or over the material in a continuous or semi-continuous operation.

In accordance with a second aspect, the present invention provides method of producing a fuel oil composition with improved oxidation stability, the fuel oil composition comprising a fuel oil and at least one fuel additive, wherein the fuel oil comprises alkyl esters of fatty acids obtained from vegetable or animal materials, the method comprising the steps of (i) contacting the esters with one or more ion-exchange materials; wherein the one or more ion-exchange materials consist of materials as defined in relation to the first aspect, and (ii) adding at least one fuel additive to the fuel oil.

Steps (i) of the above method may be performed before step (ii) or *vice versa.*

Preferably, the improvement in oxidation stability of the alkyl esters of fatty acids obtained from vegetable or animal materials is such that the induction period of the esters after processing is longer than the induction time period to processing, induction periods being those measured by the Rancimat Test (ISO 6886, pr EN 14112 or EN 15751).

The Rancimat Test (ISO 6886, pr EN 14112 or EN 15751) originated in the food industry [see for example: H.Prankl, "Oxidation Stability of fatty acid methyl esters", 10th European Conference on Biomass for Energy and Industry, 8-11 June 1998, Wurzburg]. In the test, samples are aged at a constant temperature (110°C) whilst air is passed through the sample at a rate of 10 litres/hour. The exhaust airflow passes through a measuring cell filled with distilled water. The conductivity of the measuring cell is determined continuously and recorded automatically. As the sample oxidises, volatile organic acids are produced and taken up by the distilled water. This increases the conductivity of the water. The oxidation process is such that there is a gradual increase in measured conductivity followed by a rapid increase. The length of the period prior to the rapid increase, known as the 'induction period' is a measure of the oxidation stability of the sample under test. Treatment of the esters according to the present invention will lengthen the induction period. An improvement in the oxidation stability of the esters is manifest by an increase in the induction period measured by the Rancimat Test compared to the unprocessed sample. The Rancimat Test has been adopted as a specification test in the qualification of pure biodiesel fuels. The modified test of EN 15751 has been introduced to assess the oxidation stability of blends of biodiesel with petroleum-derived oils, the modification being required to allow for the higher volatility of the petroleum-derived components.

The fuel oil composition contains at least one fuel additive. As known in the art, fuel oil compositions commonly contain additives to improve one or more properties of the fuel oil.

Preferably, the at least one fuel additive is an anti-oxidant capable of improving the oxidation stability of the fuel oil. Suitable species will be known to those skilled in the art. Examples are the aryl-aminic and phenolic anti-oxidants described hereinabove. In a particularly preferred embodiment, the at least one fuel additive is a phenolic anti-oxidant, most preferably 2,5,-di-tert-butylhydroquinone (BHQ). A synergistic improvement in anti-oxidancy behaviour has been observed on adding BHQ to a fuel oil which has been processed according to the present invention.

A non-exhaustive list of other suitable additives which may find use in the present invention includes low-temperature flow improving additives, wax anti-settling additives, detergents, dispersants, lubricity additives, demulsifiers, cetane improvers, electrical conductivity improving additives, reodourants and metal chelators. The precise nature of the at least one fuel additive is not critical and suitable species will be known to those skilled in the art. Each fuel additive will typically be present in the fuel oil composition in an amount of between 1 and 10,000 parts per million by weight based on the weight of the fuel oil.

The invention will now be described by way of example only.

Fuel 1 was rape-seed methyl ester. Fuel 2 was a blend of 20% by weight of Fuel 1 with 80% by weight of a diesel fuel having an initial boiling point of 203°C and a final boiling point of 349°C and a sulphur content of 14 ppm by weight.

Experiments performed and the results obtained are detailed in Table 1 below

**Table 1**

| | **Before ion-exchange** | | **After ion-exchange** | |
|---|---|---|---|---|
| **Additive** | **Treat rate/wppm** | **Induction time/hrs** | **Treat rate/wppm** | **Induction time/hrs** |
| None | - | 4.98 | - | 8.45 |
| BHT | 50 | 5.12 | 50 | 8.16 |
| | 200 | 6.13 | 200 | 10.38 |
| | 400 | 6.94 | 400 | 10.46 |
| BHQ | 25 | 5.53 | 25 | 9.01 |
| | 100 | 7.04 | 100 | 15.61 |
| | 200 | 8.91 | 200 | 19.44 |
| WASA | 25 | 5.04 | 25 | 8.85 |
| | 100 | 4.91 | 100 | 9.98 |
| | 200 | 5.15 | 200 | 8.31 |
| P1 | 50 | 4.77 | 50 | 8.08 |
| | 200 | 5.14 | 200 | 8.57 |
| | 400 | 5.59 | 400 | 9.13 |
| P2 | 25 | 4.88 | 25 | 8.40 |
| | 100 | 4.87 | 100 | 8.64 |
| | 200 | 5.26 | 200 | 11.03 |

The fuel additives used were two phenolic antioxidants BHT and BHQ; a wax anti-settling additive (WASA) being the product of the condensation reaction between an alkyl hydroxybenzoate ester and formaldehyde; an additive package (P1) containing a phenolic antioxidant, a dispersant, a metal chelating compound and a demulsifier; and an additive package (P2) containing a phenolic antioxidant and a dispersant.

The additives were added to samples of Fuel 1 which had not been contacted with the ion-exchange material and the Rancimat induction time was measured. Then additives were added to samples of Fuel 1 which had been treated as follows: 50g samples of the fuel were contacted with 0.5g of a strong cation-exchange material having sulphonic acid functionality (Amberlyst^{®} 15) at a temperature of 100°C for a period of 4 hours. Again, Rancimat induction times were measured.

As shown in Table 1, in all cases the anti-oxidancy behaviour of the fuel composition was improved, as evidenced by the increase in Rancimat induction time. Of particular note are the experiments with BHQ where it can be seen that the improvement versus the unadditised fuel was significantly greater on addition of BHQ for the sample which had been contacted with the ion-exchange material.

In a further set of experiments, 25, 100 and 200 wppm of BHQ were added to separate samples of Fuel 1 and these fuel compositions were contacted with the ion-exchange material in the manner described above. The Rancimat induction times of the treated fuel composition were 9.30, 12.73 and 18.27 hours respectively, all showing significant improvements over samples which had not been contacted with the ion-exchange material (see results from Table 1). These results confirm that the additive can be provided to the fuel either before or after contacting the fuel with the ion-exchange material.

A yet further set of experiments used Fuel 2. The methodology was the same as described above. Results are given in Table 2 below.

**Table 2**

| | **Before ion-exchange** | | **After ion-exchange** | |
|---|---|---|---|---|
| **Additive** | **Treat rate/wppm** | **Induction time/hrs** | **Treat rate/wppm** | **Induction time/hrs** |
| None | - | 12.01 | - | <24 |
| BHT | 10 | 12.86 | 10 | 29.15 |
| | 40 | 14.58 | 40 | 37.33 |
| | 80 | 18.15 | 80 | 38.52 |

The additive was added to each fuel sample after the fuel had been contacted with the ion-exchange material. As before, significant improvements in anti-oxidancy behaviour were observed.

## Claims

1. A fuel oil composition comprising a fuel oil and at least one fuel additive; wherein the fuel oil comprises alkyl esters of fatty acids obtained from vegetable or animal materials, optionally in combination with a petroleum-derived oil; wherein the alkyl esters of fatty acids obtained from vegetable or animal materials have been processed such that their oxidation stability has been improved, such processing comprising contacting the esters with one or more ion-exchange materials; wherein the one or more ion-exchange materials consist of materials represented by the formula: 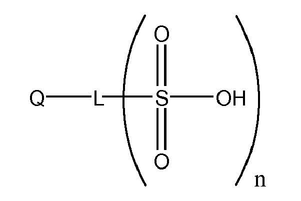 where Q represents a solid support, L represents an optional linking group and n is an integer of 1 or more.

2. A fuel oil composition according to claim 1 wherein the alkyl esters of fatty acids obtained from vegetable or animal materials consist essentially of methyl or ethyl esters, preferably methyl esters.

3. A fuel oil composition according to claim 1 or claim 2 wherein the at least one fuel additive is an antioxidant capable of improving the oxidation stability of the fuel oil.

4. A fuel oil composition according to claim 3 wherein the antioxidant is a phenolic anti-oxidant, preferably 2,5,-di-tert-butylhydroquinone (BHQ).

5. A fuel oil composition according to claim 4 wherein the antioxidant is 2,5,-di-tert-butylhydroquinone (BHQ).

6. A fuel oil composition according to any preceding claim wherein the at least one fuel additive is chosen from the group comprising low-temperature flow improving additives, detergents, dispersants, lubricity additives, demulsifiers, cetane improvers, electrical conductivity improving additives, reodourants and metal deactivators.

7. A method of producing a fuel oil composition with improved oxidation stability, the fuel oil composition comprising a fuel oil and at least one fuel additive, wherein the fuel oil comprises alkyl esters of fatty acids obtained from vegetable or animal materials, the method comprising the steps of (i) contacting the esters with one or more ion-exchange materials; wherein the one or more ion-exchange materials consist of materials represented by the formula: 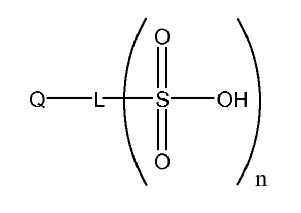 where Q represents a solid support, L represents an optional linking group and n is an integer of 1 or more, and (ii) adding at least one fuel additive to the fuel oil.

8. The method of claim 7 wherein the enhanced oxidation stability of the fuel oil composition is such that the induction period of the alkyl esters of fatty acids obtained from vegetable or animal materials esters after contact with the one or more ion-exchange materials is longer than the induction period prior to contact, induction periods being those measured by the Rancimat Test (ISO 6886, pr EN 14112 or EN 15751).
